# FASCICULE DE BREVET EUROPEEN

(11) **EP 3 438 725 B1**
(45) Date de publication et mention de la délivrance du brevet: **27.11.2019**
(21) Numéro de dépôt: 18183147.0
(22) Date de dépôt: 12.07.2018
(51) Int. Cl.: G02B 27/01

(54) **SYSTEME DE VISUALISATION COMPORTANT UN DISPOSITIF OPTIQUE HOLOGRAPHIQUE PERMETTANT D'AFFICHER DES IMAGES DANS DES PLANS DIFFERENTS**
ANZEIGESYSTEM, DAS EINE OPTISCHE HOLOGRAFISCHE VORRICHTUNG UMFASST, DIE ES ERMÖGLICHT, BILDER IN VERSCHIEDENEN EBENEN ANZUZEIGEN
DISPLAY SYSTEM COMPRISING A HOLOGRAPHIC OPTICAL DEVICE FOR DISPLAYING IMAGES IN VARIOUS PLANES

(30) Priorité: 31.07.2017 FR 1700806
(43) Date de publication de la demande: 06.02.2019
(73) Titulaire: THALES, 92400 Courbevoie (FR)
(72) Inventeur: CONI, Philippe, 33127 Saint Jean d'Illac (FR); BARDON, Jean-Luc, 33127 Martignas sur Jalle (FR); DUBOURG, Bernard, 33700 Merignac (FR)
(74) Mandataire: Bréda, Jean-Marc

(56) Documents cités:
- EP-A1- 0 290 333
- WO-A2-2011/144939

## Description

Le domaine de l'invention est celui des systèmes de visualisation permettant de projeter une image à une certaine distance d'un observateur en superposition sur le paysage extérieur. Ces systèmes sont notamment utilisés dans les cockpits d'aéronef pour donner au pilote des informations sur le pilotage ou la navigation. D'autres applications sont possibles, notamment dans le domaine du transport automobile.

Il existe des systèmes de visualisation appelés « Viseurs Tête Haute » ou « Head-Up Display » qui permettent de projeter une image collimatée à « l'infini » en superposition sur le paysage extérieur. On entend par objet à « infini » un objet à une distance suffisamment grande de sorte que les rayons lumineux issus d'un point de l'objet soient perçus comme parallèles entre eux vus de l'observateur.

Ces dispositifs permettent d'afficher des objets virtuels en position dite « conforme », c'est-à-dire que leurs images se superposent parfaitement aux emplacements que des objets réels occupent à l'extérieur. Ainsi, l'image d'une piste synthétique est affichée en superposition parfaite à l'endroit exact que la piste réelle occupe sur le terrain. Il en est de même, par exemple, de la ligne d'horizon.

Cependant, le pilote a besoin d'informations qui ne sont pas conformes et qui ne sont pas affichées par les « Head-Up Display ». Actuellement, ces informations sont présentées sur des dispositifs de visualisation montés sur la planche de bord. Cette présentation a deux inconvénients. Le pilote doit nécessairement quitter la vision de l'extérieur pour les regarder. Par ailleurs, il y a un nécessaire temps d'accommodation entre le passage de la vision extérieur à l'observation de la planche de bord qui se trouve à moins d'un mètre de son regard.

Pour remédier à ces inconvénients, il a été proposé de réaliser des écrans de visualisation transparents, pouvant être intégrés au pare-brise de l'aéronef. On résout ainsi le problème de la superposition sur l'extérieur. Cependant, l'image est nécessairement localisée sur l'écran. Elle n'est donc pas conforme et elle n'est pas à l'infini. Les problèmes d'accommodation ne sont donc pas résolus.

Pour pallier ces différents problèmes, on peut utiliser une détection de posture de la tête de l'utilisateur associée à un système stéréoscopique. La détection de posture permet d'asservir la position des images projetées de façon que, lorsque l'utilisateur bouge la tête, l'image projetée est toujours vue dans la même direction. Elle est ainsi perçue comme conforme.

Le système stéréoscopique permet d'envoyer à chaque œil les images gauche et droite correspondant à une pseudo-distance d'un objet, indépendante de la distance réelle de l'écran stéréoscopique à l'observateur. On résout ainsi les problèmes de vergence. Cependant, les images gauche et droite sont toujours situées sur l'écran. Les problèmes d'accommodation ne sont pas résolus. On introduit en fait une distorsion entre les informations de vergence et les informations d'accommodation. Par ailleurs, les systèmes stéréoscopiques nécessitent l'emploi de lunettes permettant de différentier les images gauche et droite, ce qui peut entraîner d'autres problèmes, notamment d'ergonomie. On citera, comme exemple de réalisation de ce type de système, le brevet FR 14 02109 intitulé « Système de visualisation stéréoscopique monochrome à projection sur lame semi-transparente ».

Une autre approche consiste à projeter périodiquement des images situées à des distances différentes de l'observateur. Pour réaliser cette fonction, l'objet initial est généré dans des plans différents au moyen de diffuseurs ou « shutters » optiques qui peuvent être rendus transparents ou opaques. La publication de Shuxin Liu et al intitulée « A multi-plane volumetric optical see-through head mounted 3D display » parue dans SID, Issue 1, San Francisco, CA, May 22-May 27, 2016 propose une solution de ce type où le système de visualisation est monté sur casque. On comprend que l'adaptation à des dispositifs de visualisation de bord de plus grande dimension pose des problèmes de réalisation complexes.

Des études réalisées à partir d'images projetées à distance finie montrent que, si l'on veut voir simultanément en vision stéréoscopiques des images aériennes conformes à l'infini et des images non conformes à une certaine distance dans des conditions de confort visuels raisonnables, c'est-à-dire sans perte d'acuité visuelle et sans fatigue oculaire importante, il n'est nécessaire que la distance minimale des images non conformes ne soit pas inférieure à environ 1.7 mètre. On se reportera sur ce point à la publication intitulée « A full Windshield Head-Up display using Simulated Collimation » de Philippe Coni et al, SID 2016 DIGEST, pages 684-687.

Les éléments optiques holographiques sont des composants optiques obtenus par l'enregistrement d'un phénomène d'interférences à deux ondes dans un matériau photosensible, les interférences provoquant des variations d'indice optique à l'intérieur du matériau qui sont conservées lorsque l'hologramme est ensuite développé. Ces éléments sont dits hologramme de phase épais dans la mesure où le matériau photosensible doit avoir une certaine épaisseur pour permettre l'enregistrement d'un nombre significatif de franges d'interférence et dans la mesure également où les variations d'indice entraînent uniquement des variations de phase sur les ondes lumineuses incidentes sans variation d'amplitude. Ces éléments peuvent fonctionner par réflexion ou par transmission.

Ces éléments holographiques présentent un certain nombre de propriétés remarquables. Il est, en effet, possible d'obtenir une grande variété de fonctions optiques en variant la forme des ondes d'enregistrement. Ces fonctions sont, en partie, indépendantes de la forme du support de l'élément optique holographique. Ainsi, un élément optique holographique enregistré sur un support plan peut posséder de la puissance optique et avoir une fonction comparable à celle d'un prisme, d'une lentille ou d'un miroir.

Enfin, ces éléments holographiques présentent, par nature, une sélectivité spectrale. Pour une incidence donnée, le composant holographique réfléchit la lumière dans une bande spectrale donnée et est transparent en dehors de cette bande spectrale, la bande spectrale dépendant de la longueur d'onde d'enregistrement et plus généralement, des conditions d'enregistrement. On se reportera à l'article fondateur de H. Kogelnik intitulé « Coupled Wave Theory for thick Hologram Gratings", The Bell System Technical Journal, Vol. 48, Nov. 1969, N° 9 pour toutes informations sur le fonctionnement diffractif de ce type d'hologramme.

Il est également possible d'enregistrer des hologrammes ayant des fonctions optiques différentes à des longueurs d'onde différentes dans un même support photosensible. On se reportera à la publication US 2012/0086993 intitulée « Photopolymer médium for color hologram recording and color hologram image recording method » pour des informations complémentaires sur ce point. On citera également la publication US 2013/0065159 intitulée « Color holographic optical element » sur ce sujet. La seule contrainte est que les bandes spectrales de restitution doivent être suffisamment disjointes pour éviter tout phénomène de diaphonie ou « cross-talk ». Les documents WO2011/144939 A2 et EP 0 290 333 A1 divulguent des dispositifs holographiques permettant de visualiser deux images.

Le système de visualisation selon l'invention exploite ces différentes propriétés des éléments optiques holographiques. Il comporte un dispositif de collimation comportant deux éléments optiques holographiques permettant de superposer sur l'extérieur deux images de couleur différente à deux distances différentes. Plus précisément, l'invention a pour objet un système de visualisation comportant un écran et un dispositif optique de collimation formant l'image de cet écran à une première distance dudit écran, ledit dispositif optique comportant deux éléments optiques holographiques fonctionnant par réflexion, le premier élément optique holographique étant le plus proche de l'écran, le second élément optique holographique étant le plus proche d'un observateur, caractérisé en ce que :
- l'écran affichant un premier objet à une première longueur d'onde et un second objet à une seconde longueur d'onde, la première longueur d'onde étant différente de la seconde longueur d'onde ;
- le premier élément optique holographique comporte un premier traitement holographique ayant une première puissance optique réfléchissant la première longueur d'onde et transmettant la seconde longueur d'onde ;
- le premier élément optique holographique comporte un second traitement holographique ayant une seconde puissance optique réfléchissant la seconde longueur d'onde et transmettant la première longueur d'onde ;
- le second élément optique holographique comporte un troisième traitement holographique ayant une troisième puissance optique réfléchissant la première longueur d'onde et transmettant la seconde longueur d'onde ;
- le second élément optique holographique comporte un quatrième traitement holographique ayant une quatrième puissance optique réfléchissant la seconde longueur d'onde et transmettant la première longueur d'onde ;
- le premier élément holographique et le second élément holographique étant agencés de façon que l'image du premier objet à la première longueur d'onde se forme à une première distance de l'écran et que l'image du second objet à la seconde longueur d'onde se forme à une seconde distance de l'écran, sensiblement différente de la première distance.

Avantageusement, le premier objet est émis dans une première bande spectrale étroite centrée sur la première longueur d'onde, le second objet est émis dans une seconde bande spectrale étroite centrée sur la seconde longueur d'onde, la première bande spectrale étant disjointe de la seconde bande spectrale, chaque bande ayant une largeur spectrale comprise entre 10 nanomètres et 20 nanomètres.

Avantageusement, la première longueur d'onde et la seconde longueur d'onde ont des colorimétries voisines.

Avantageusement, la première longueur d'onde et la seconde longueur d'onde ont des colorimétries différentes.

Avantageusement, la première longueur d'onde est située dans le vert et la seconde longueur d'onde dans le rouge.

Avantageusement, l'écran affiche le premier objet à une troisième longueur d'onde différente de la première longueur d'onde et de la seconde longueur d'onde, le premier traitement holographique et le troisième traitement holographique réfléchissant ladite troisième longueur d'onde.

Avantageusement, la troisième puissance optique et la quatrième puissance optique sont nulles.

Avantageusement, le premier élément holographique est parallèle au second élément holographique.

Avantageusement, la forme du second élément optique holographique est adaptée de façon à s'intégrer à un pare-brise d'aéronef.

Avantageusement, l'angle sous lequel est vu de l'observateur l'image du premier ou l'image du second objet est d'environ 20 degrés dans un axe vertical.

Avantageusement, la première distance est à l'infini et la seconde distance est de quelques mètres.

L'invention concerne également le procédé de réalisation d'un premier élément optique holographique et d'un second élément optique holographique comme définis ci-dessus, caractérisé en ce qu'au moins un des traitements holographiques est réalisé au moyen de l'enregistrement d'un phénomène d'interférences entre deux ondes lumineuses issues d'une même source, l'une au moins des deux ondes étant plane.

Avantageusement, au moins un des traitements holographiques est réalisé au moyen de l'enregistrement d'un phénomène d'interférences entre deux ondes lumineuses issues d'une même source, l'une au moins des deux ondes étant sphérique.

Avantageusement, au moins un des traitements holographiques est réalisé au moyen de l'enregistrement d'un phénomène d'interférences entre deux ondes lumineuses issues d'une même source, l'une au moins des deux ondes étant asphérique, le banc d'enregistrement comportant au moins un élément optique excentré disposé sur le parcours de ladite onde asphérique.

Avantageusement, au moins un des traitements holographiques est réalisé au moyen de l'enregistrement d'un phénomène d'interférences entre deux ondes lumineuses issues d'une même source, l'une au moins des deux ondes étant asphérique, le banc d'enregistrement comportant au moins un élément optique holographique généré numériquement disposé sur le parcours de ladite onde asphérique.

L'invention sera mieux comprise et d'autres avantages apparaîtront à la lecture de la description qui va suivre donnée à titre non limitatif et grâce aux figures annexées parmi lesquelles :
La figure 1 représente un synoptique d'un système de visualisation selon l'invention ;
La figure 2 représente la configuration optique du système de visualisation selon l'invention dans le cas d'une image à l'infini ;
La figure 3 représente un premier banc d'enregistrement d'un premier élément optique holographique selon l'invention ;
La figure 4 représente un second banc d'enregistrement d'un second élément optique holographique selon l'invention.

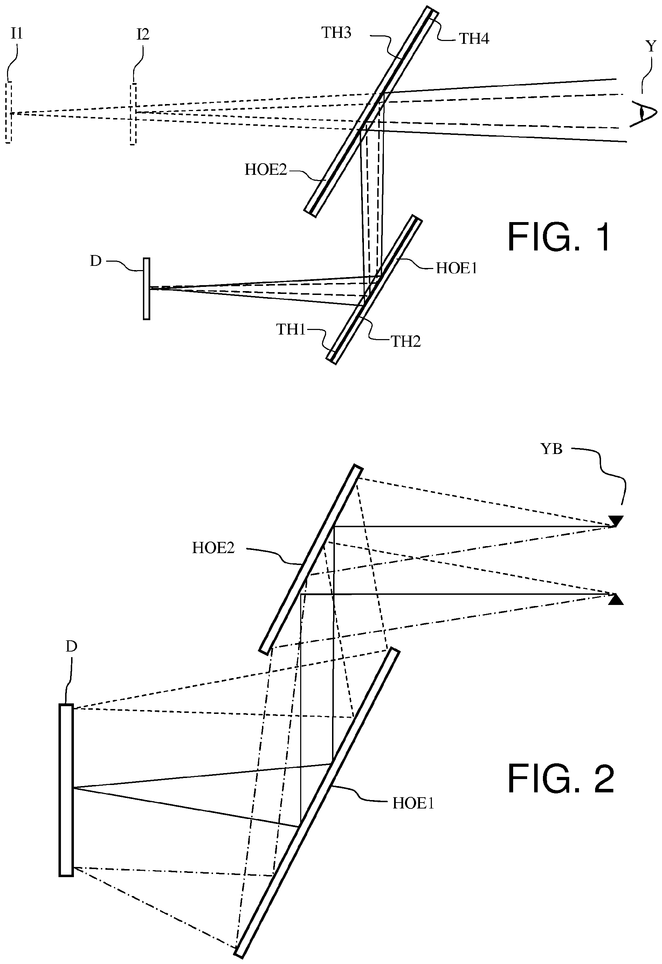

La figure 1 représente le synoptique d'un système de visualisation selon l'invention. Il comprend essentiellement un écran de visualisation D et deux éléments optiques holographiques HOE1 et HOE2. Le premier élément holographique HOE1 est le plus proche de l'écran D et le second élément holographique HOE2 le plus proche de l'œil Y de l'observateur. Les rayons lumineux émis à une première longueur d'onde sont représentés par des traits fins et les rayons lumineux émis à une seconde longueur d'onde sont représentés par des traits pointillés sur cette figure 1.

L'écran de visualisation D émet deux objets. Le premier objet est émis à une première longueur d'onde ou dans une bande spectrale étroite autour de ladite première longueur d'onde, le second objet est émis à une seconde longueur d'onde ou dans une bande spectrale étroite autour de ladite seconde longueur d'onde. Les deux bandes spectrales sont disjointes. Chaque bande spectrale a une largeur spectrale comprise entre 10 nanomètres et 20 nanomètres.

Les deux longueurs d'onde peuvent être suffisamment proches pour que les sensations colorées soient voisines. Par exemple, les deux longueurs d'onde peuvent être émises dans le « vert », c'est-à-dire dans une bande spectrale comprise entre 510 nm et 540 nm.

Les deux longueurs d'onde peuvent être suffisamment éloignées pour que les sensations colorées soient différentes. Par exemple, la première longueur d'onde peut être émise dans le « vert » comme défini précédemment et la seconde longueur d'onde peut être émise dans le « rouge », c'est-à-dire dans une bande spectrale comprise entre 600 nm et 650 nm. D'autres choix de longueur d'onde sont possibles. Le choix des longueurs d'onde dépend des objets affichés et de l'utilisation qui en est faite.

A titre de premier exemple, l'écran de visualisation peut être constitué d'un projecteur bispectral qui projette les deux objets émis à des longueurs d'onde différentes sur un écran diffusant. Les deux objets peuvent être obtenus au moyen d'afficheurs matriciels éclairés par des diodes électroluminescentes ou des diodes laser. Ces afficheurs peuvent fonctionner par transmission. C'est le cas, par exemple, des afficheurs à cristaux liquides ou « LCD ». Ils peuvent fonctionner par réflexion. C'est le cas, par exemple, des afficheurs dits « DLP », acronyme signifiant « Digital Light Processing ».

A titre de second exemple, les afficheurs peuvent être émissifs, de type « OLED », acronyme de « Organic Light emitting Diode » ou de type micro-LEDs.

Il est également possible, si l'afficheur émet dans une bande spectrale suffisamment large, d'attribuer une partie de cette bande à un premier objet et une autre partie à un second objet au moyen de filtres interférentiels variables. Le brevet français FR 3 028 051 intitulé « Système de visualisation stéréoscopique à multiplexage de longueur d'onde actif » décrit une solution de ce type.

On peut également projeter les deux objets sur deux écrans différents et les recombiner ensuite au moyen d'une lame semi-réfléchissante. Cette dernière solution permet de disposer les objets dans des plans identiques ou différents.

L'ensemble des deux éléments holographiques forme de chaque objet une image aérienne à une distance différente. En effet, chaque élément optique holographique a la particularité de comporter deux traitements holographiques qui sont chacun adapté à une des deux longueurs d'onde précédentes et qui ont des puissances optiques différentes.

Ainsi, le premier élément optique holographique HOE1 comporte un premier traitement holographique TH1 ayant une première puissance optique réfléchissant la première longueur d'onde et transmettant la seconde longueur d'onde. Le premier élément optique holographique HOE1 comporte un second traitement holographique TH2 ayant une seconde puissance optique réfléchissant la seconde longueur d'onde et transmettant la première longueur d'onde.

Le second élément optique holographique HOE2 comporte un troisième traitement holographique TH3 ayant une troisième puissance optique réfléchissant la première longueur d'onde et transmettant la seconde longueur d'onde. Le second élément optique holographique HOE2 comporte un quatrième traitement holographique TH4 ayant une quatrième puissance optique réfléchissant la seconde longueur d'onde et transmettant la première longueur d'onde. Ce second élément holographique a également une seconde fonction optique. Il doit transmettre le paysage extérieur sans distorsion et avec une atténuation la plus faible possible.

Par ce moyen, il est possible de créer une puissance optique adaptée à chaque objet. Le premier objet émis à la première longueur d'onde est focalisé à une première distance par le premier traitement holographique TH1 et le troisième traitement holographique TH3. Il correspond à l'image I1 sur la figure 1. Le second objet émis à la seconde longueur d'onde est focalisé à une seconde distance par le second traitement holographique TH2 et le quatrième traitement holographique TH4. Il correspond à l'image I2 sur la figure 1.

Généralement, la première distance est à l'infini optique et la seconde distance est à distance finie. Comme il a été dit, pour obtenir un certain confort visuel, il est important que cette seconde distance soit supérieure ou égale à 1.7 mètre de l'observateur. Pour des raisons de clarté de représentation, la première distance et la seconde distance sont à distance finie sur la figure 1.

Il n'est pas nécessaire que tous les traitements holographiques aient de la puissance optique. A titre d'exemple, la troisième puissance optique et la quatrième puissance optique peuvent être nulles. Dans ce cas, le second élément holographique réfléchit uniquement les images données par le premier élément holographique de façon non cartésienne, c'est-à-dire que l'angle de réflexion ou de diffraction n'est pas égal à l'angle d'incidence.

A titre d'exemple de réalisation non limitatif, la figure 2 représente un système de visualisation selon l'invention. Il comporte un écran de visualisation D et deux éléments optiques holographiques HOE1 et HOE2. Ce système est destiné à être monté dans un cockpit d'aéronef, le second élément optique holographique étant destiné à être intégré au pare-brise ou « windshield » de l'aéronef. Ce système est destiné à fonctionner à deux longueurs d'onde mais sur la figure 2, seul le parcours des rayons lumineux pour une seule longueur d'onde est représenté. A titre d'exemple, cette longueur d'onde est située dans le vert, la bande spectrale d'émission étant d'environ 16 nm. Les traits fins représentent le parcours des rayons lumineux au centre du champ pour cette longueur d'onde, les traits pointillés représentent le parcours des rayons lumineux pour les deux bords de champ pour cette même longueur d'onde.

Dans la configuration de la figure 2, l'image de l'écran est projetée à l'infini.

Sur la figure 2 également, les rectangles en traits gras représentent l'écran de visualisation D et les hologrammes HOE1 et HOE2. Les deux triangles noirs délimitent les limites de la « boîte à œil » YB du système de visualisation. On entend par boîte à œil la zone où l'œil d'un observateur est censé se situer pour voir correctement les images.

L'écran a une hauteur d'environ 270 mm. L'image est obtenue par les moyens évoqués plus haut et qui ne sont pas représentés sur la figure 2.

Les deux éléments optiques holographiques sont enregistrés sur des supports plans ou sensiblement plans. Ils sont sensiblement parallèles entre eux. La largeur du premier élément holographique HOE1 est 300 mm et sa longueur 500 mm. La largeur du second élément holographique HOE2 est 200 mm et sa longueur 300 mm.

Le premier traitement holographique du premier élément optique holographique correspond à une parabole hors d'axe. Sa focale équivalente est d'environ 710 mm. Le troisième traitement holographique du second élément optique holographique n'a pas de puissance optique. Il correspond à un miroir non cartésien.

La hauteur de la « Boîte à œil » est d'environ 100 mm et sa largeur 200 mm. Le champ vertical de l'image projetée est d'environ 20 degrés et le champ horizontal est d'environ 30 degrés. Il correspond approximativement à celui des HUDs actuels.

Dans cette configuration, les aberrations optiques et les aberrations chromatiques restent acceptables pour un système de visualisation. Les aberrations optiques sont caractérisées essentiellement par les défauts de parallaxe existant entre les images gauche et droite reçues par chaque œil. La distorsion peut être corrigée au niveau des objets affichés.

La réalisation des hologrammes passe par un enregistrement d'un phénomène d'interférences à deux ondes dans un matériau photosensible. Généralement, on utilise comme matériau des photopolymères. Ces matériaux ont une très bonne résolution, compatible du pas des franges d'interférence, permettent d'atteindre de hauts rendements diffractifs et présentent peu de diffusion. L'épaisseur utile du matériau est comprise entre 16 µm et 25 µm, de façon à obtenir des rendements diffractifs importants à la longueur d'onde souhaitée dans une bande spectrale étroite.

Le support du composant holographique peut être du verre ou un verre organique comme le polycarbonate. Il est à noter que le support du composant holographique peut être modifié entre l'enregistrement et le montage dans le système de visualisation soit par usinage, soit par collage, soit par laminage-délaminage.

Comme il a été dit, chaque composant holographique comporte deux traitements holographiques. Pour réaliser les deux traitements, plusieurs techniques sont possibles. On peut réaliser deux hologrammes qui sont ensuite collés l'un sur l'autre. On peut également réaliser deux enregistrements dans le même substrat à deux longueurs d'onde différentes. Les enregistrements sont réalisés au moyen d'une source laser dont la longueur d'onde d'émission est généralement identique ou voisine de la longueur d'onde de restitution.

Il est possible d'adapter la géométrie du banc d'enregistrement de façon à compenser les différences de longueur d'onde entre l'enregistrement et la restitution. On sait, en effet, que le pas des franges d'interférence dépend de la longueur d'onde mais aussi de l'incidence des ondes d'enregistrement.

De la même façon, le procédé de « développement » de l'hologramme entre l'enregistrement et la restitution peut entraîner une variation globale de l'épaisseur du matériau photosensible, phénomène appelé rétrécissement ou « shrinkage ». Ce resserrement du pas des franges peut être compensé à l'enregistrement par une géométrie du banc adaptée.

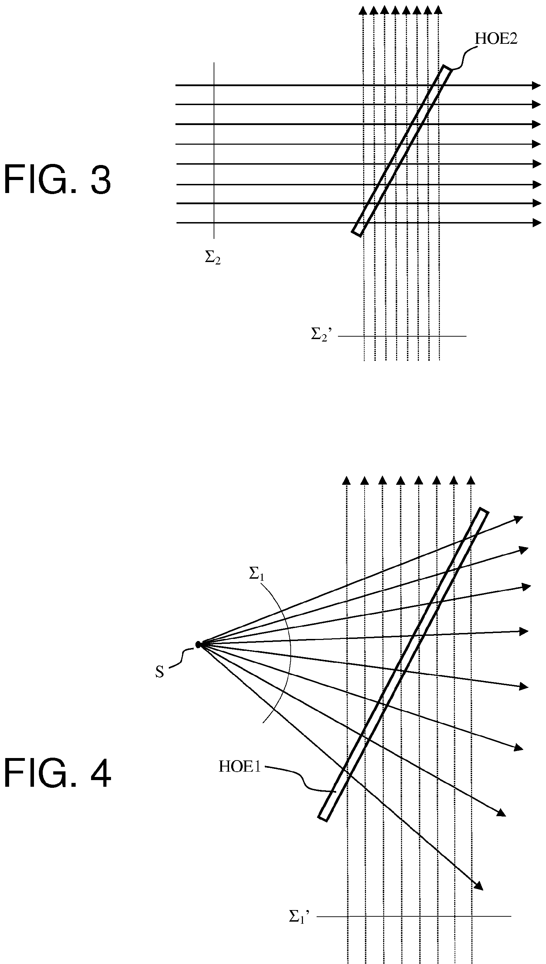

A titre d'exemples non limitatifs, les figures 3 et 4 représentent deux bancs d'enregistrement. Sur ces figures, les rayons lumineux sont représentés par des flèches et les surfaces d'onde par des traits fins. Le premier banc de la figure 3 représente l'enregistrement d'un traitement holographique de type miroir non cartésien HOE2. Ce miroir est obtenu au moyen de l'enregistrement de deux ondes planes Σ₂ et Σ_{2'} disposées de part et d'autre de l'hologramme. Sur cette figure, la source et les optiques de collimation permettant de réaliser les deux ondes planes ne sont pas représentées.

Le second banc de la figure 4 représente l'enregistrement d'un traitement holographique de type miroir parabolique hors d'axe HOE1. Ce miroir est obtenu au moyen de l'enregistrement d'une onde sphérique Σ₁ issue d'une source S et d'une onde plane Σ_{1'} disposées de part et d'autre de l'hologramme. Sur cette figure, l'optique de collimation permettant de réaliser l'onde plane n'est pas représentée. Il est à noter que l'onde sphérique peut être divergente comme indiqué sur la figure 4 ou elle peut être convergente. Les ondes convergentes sont plus difficiles à réaliser dans la mesure où le banc d'enregistrement doit comporter des optiques de grande taille.

Il est possible d'enregistrer des surfaces d'onde plus complexes que le plan ou la sphère. On peut réaliser des surfaces d'onde asphériques simples en interposant, par exemple, des prismes ou des miroirs sur le parcours d'une des deux ondes d'enregistrement. On peut également réaliser des surfaces d'onde asphériques très asphérisées en interposant, par exemple, des hologrammes créés numériquement appelés « CGH », acronyme de « Computer Generated Holograms ».

Dans ce qui précède, le système de visualisation selon l'invention fonctionne avec deux longueurs d'onde et deux distances de collimation différentes. Il est possible de multiplier les longueurs d'onde, par exemple pour afficher des images bichromes ou couleur. Dans ce cas, le premier objet et/ou le second objet comporte trois composantes, bleue, verte et rouge et chaque élément optique holographique comporte trois traitements adaptés à chaque composante.

Il est également possible de multiplier les distances de collimation en multipliant les objets affichés.

Cependant, chaque fois que l'on utilise une bande spectrale pour former une image à une certaine distance, le paysage n'est plus transmis par le second élément optique holographique dans cette même bande spectrale, baissant d'autant la transmission du système de visualisation.

## Revendications

1. Système de visualisation comportant un écran (D) et un dispositif optique de collimation formant l'image (I1) de cet écran à une première distance dudit écran, ledit dispositif optique comportant deux éléments optiques holographiques (HOE1, HOE2) fonctionnant par réflexion, le premier élément optique holographique (HOE1) étant le plus proche de l'écran, le second élément optique holographique (HOE2) étant le plus proche d'un observateur, **caractérisé en ce que** :
- l'écran affichant un premier objet à une première longueur d'onde et un second objet à une seconde longueur d'onde, la première longueur d'onde étant différente de la seconde longueur d'onde ;
- le premier élément optique holographique (HOE1) comporte un premier traitement holographique (TH1) ayant une première puissance optique réfléchissant la première longueur d'onde et transmettant la seconde longueur d'onde ;
- le premier élément optique holographique (HOE1) comporte un second traitement holographique (TH2) ayant une seconde puissance optique réfléchissant la seconde longueur d'onde et transmettant la première longueur d'onde ;
- le second élément optique holographique (HOE2) comporte un troisième traitement holographique (TH3) ayant une troisième puissance optique réfléchissant la première longueur d'onde et transmettant la seconde longueur d'onde ;
- le second élément optique holographique (HOE2) comporte un quatrième traitement holographique (TH4) ayant une quatrième puissance optique réfléchissant la seconde longueur d'onde et transmettant la première longueur d'onde ;
- le premier élément holographique et le second élément holographique étant agencés de façon que l'image (I1) du premier objet à la première longueur d'onde se forme à une première distance de l'écran et que l'image (I2) du second objet à la seconde longueur d'onde se forme à une seconde distance de l'écran, sensiblement différente de la première distance.

2. Système de visualisation selon la revendication 1, **caractérisé en ce que** le premier objet est émis dans une première bande spectrale étroite centrée sur la première longueur d'onde, le second objet est émis dans une seconde bande spectrale étroite centrée sur la seconde longueur d'onde, la première bande spectrale étant disjointe de la seconde bande spectrale, chaque bande ayant une largeur spectrale comprise entre 10 nanomètres et 20 nanomètres.

3. Système de visualisation selon l'une des revendications précédentes, **caractérisé en ce que** la première longueur d'onde et la seconde longueur d'onde ont des colorimétries voisines.

4. Système de visualisation selon l'une des revendications 1 à 3, **caractérisé en ce que** la première longueur d'onde et la seconde longueur d'onde ont des colorimétries différentes.

5. Système de visualisation selon la revendication 3, **caractérisé en ce que** la première longueur d'onde est située dans le vert et la seconde longueur d'onde dans le rouge.

6. Système de visualisation selon l'une des revendications précédentes, **caractérisé en ce que** l'écran affiche le premier objet à une troisième longueur d'onde différente de la première longueur d'onde et de la seconde longueur d'onde, le premier traitement holographique et le troisième traitement holographique réfléchissant ladite troisième longueur d'onde.

7. Système de visualisation selon l'une des revendications précédentes, **caractérisé en ce que** la troisième puissance optique et la quatrième puissance optique sont nulles.

8. Système de visualisation selon l'une des revendications précédentes, **caractérisé en ce que** le premier élément holographique est parallèle au second élément holographique.

9. Système de visualisation selon l'une des revendications précédentes, **caractérisé en ce que** la forme du second élément optique holographique est adaptée de façon à s'intégrer à un pare-brise d'aéronef.

10. Système de visualisation selon l'une des revendications précédentes, **caractérisé en ce que** l'angle sous lequel est vu de l'observateur l'image du premier ou l'image du second objet est d'environ 20 degrés dans un axe vertical.

11. Système de visualisation selon l'une des revendications précédentes, **caractérisé en ce que** la première distance est à l'infini et la seconde distance est de quelques mètres.

12. Procédé de réalisation d'un système de visualisation selon l'une des revendications précédentes, **caractérisé en ce qu'**au moins un des traitements holographiques est réalisé au moyen de l'enregistrement d'un phénomène d'interférences entre deux ondes lumineuses issues d'une même source, l'une au moins des deux ondes (Σ'₁, Σ₂, Σ'₂) étant plane.

13. Procédé de réalisation d'un système de visualisation selon l'une des revendications 1 à 11, **caractérisé en ce qu'**au moins un des traitements holographiques est réalisé au moyen de l'enregistrement d'un phénomène d'interférences entre deux ondes lumineuses issues d'une même source, l'une au moins des deux ondes étant sphérique (Σ₁).

14. Procédé de réalisation d'un système de visualisation selon l'une des revendications 1 à 11, **caractérisé en ce qu'**au moins un des traitements holographiques est réalisé au moyen de l'enregistrement d'un phénomène d'interférences entre deux ondes lumineuses issues d'une même source, l'une au moins des deux ondes étant asphérique, le banc d'enregistrement comportant au moins un élément optique excentré disposé sur le parcours de ladite onde asphérique.

15. Procédé de réalisation d'un système de visualisation selon l'une des revendications 1 à 11, **caractérisé en ce qu'**au moins un des traitements holographiques est réalisé au moyen de l'enregistrement d'un phénomène d'interférences entre deux ondes lumineuses issues d'une même source, l'une au moins des deux ondes étant asphérique, le banc d'enregistrement comportant au moins un élément optique holographique généré numériquement disposé sur le parcours de ladite onde asphérique.

## Patentansprüche

1. Anzeigesystem, beinhaltend einen Bildschirm (D) und eine optische Kollimationsvorrichtung, welche das Bild (I1) dieses Bildschirms in einem ersten Abstand vom Bildschirm erzeugt, wobei die optische Vorrichtung zwei optische holographische Elemente (HOE1, HOE2) beinhaltet, welche mit Reflexion arbeiten, wobei sich das erste optische holographische Element (HOE1) am nächsten am Bildschirm befindet, wobei sich das zweite optische holographische Element (HOE2) am nächsten an einem Beobachter befindet, **dadurch gekennzeichnet, dass**:
- der Bildschirm ein erstes Objekt mit einer ersten Wellenlänge und ein zweites Objekt mit einer zweiten Wellenlänge anzeigt, wobei die erste Wellenlänge sich von der zweiten Wellenlänge unterscheidet;
- das erste optische holographische Element (HOE1) eine erste holographische Verarbeitung (TH1) beinhaltet, welche eine erste optische Leistung besitzt, welche die erste Wellenlänge reflektiert und die zweite Wellenlänge überträgt;
- das erste optische holographische Element (HOE1) eine zweite holographische Verarbeitung (TH2) beinhaltet, welche eine zweite optische Leistung besitzt, welche die zweite Wellenlänge reflektiert und die erste Wellenlänge überträgt;
- das zweite optische holographische Element (HOE2) eine dritte holographische Verarbeitung (TH3) beinhaltet, welche eine dritte optische Leistung besitzt, welche die erste Wellenlänge reflektiert und die zweite Wellenlänge überträgt;
- das zweite optische holographische Element (HOE2) eine vierte holographische Verarbeitung (TH4) beinhaltet, welche eine vierte optische Leistung besitzt, welche die zweite Wellenlänge reflektiert und die erste Wellenlänge überträgt;
- das erste holographische Element und das zweite holographische Element so angeordnet sind, dass das Bild (I1) des ersten Objekts mit der ersten Wellenlänge in einem ersten Abstand vom Bildschirm erzeugt wird, und das Bild (I2) des zweiten Objekts mit der zweiten Wellenlänge in einem zweiten Abstand vom Bildschirm erzeugt wird, welcher sich deutlich vom ersten Abstand unterscheidet.

2. Anzeigesystem nach Anspruch 1, **dadurch gekennzeichnet, dass** das erste Objekt in einem ersten engen Spektralbereich ausgesendet wird, welches auf die erste Wellenlänge zentriert ist, das zweite Objekt in einem zweiten engen Spektralbereich ausgesendet wird, welches auf die zweite Wellenlänge zentriert ist, wobei das erste spektrale Band vom zweiten spektrale Band getrennt ist, wobei jedes Band eine spektrale Breite zwischen 10 Nanometern und 20 Nanometern besitzt.

3. Anzeigesystem nach einem der vorhergehenden Ansprüche, **dadurch gekennzeichnet, dass** die erste Wellenlänge und die zweite Wellenlänge benachbarte Kolorimetriewerte aufweisen.

4. Anzeigesystem nach einem der Ansprüche 1 bis 3, **dadurch gekennzeichnet, dass** die erste Wellenlänge und die zweite Wellenlänge unterschiedliche Kolorimetriewerte aufweisen.

5. Anzeigesystem nach Anspruch 3, **dadurch gekennzeichnet, dass** die erste Wellenlänge sich im Grünbereich und die zweite Wellenlänge sich im Rotbereich befindet.

6. Anzeigesystem nach einem der vorhergehenden Ansprüche, **dadurch gekennzeichnet, dass** der Bildschirm ein erstes Objekt mit einer dritten Wellenlänge anzeigt, welche sich von der ersten Wellenlänge und der zweiten Wellenlänge unterscheidet, wobei die erste holographische Verarbeitung und die dritte holographische Verarbeitung die dritte Wellenlänge reflektieren.

7. Anzeigesystem nach einem der vorhergehenden Ansprüche, **dadurch gekennzeichnet, dass** die dritte optische Leistung und die vierte optische Leistung gleich null sind.

8. Anzeigesystem nach einem der vorhergehenden Ansprüche, **dadurch gekennzeichnet, dass** das erste holographische Element parallel zum zweiten holographischen Element ist.

9. Anzeigesystem nach einem der vorhergehenden Ansprüche, **dadurch gekennzeichnet, dass** die Form des zweiten optischen holographischen Elements geeignet ist, sich in eine Windschutzscheibe eines Luftfahrzeugs zu integrieren.

10. Anzeigesystem nach einem der vorhergehenden Ansprüche, **dadurch gekennzeichnet, dass** der Winkel, aus welchem das Bild des ersten Objekts oder das Bild des zweiten Objekts vom Beobachter gesehen wird, ungefähr 20 Grad in einer vertikalen Achse beträgt.

11. Anzeigesystem nach einem der vorhergehenden Ansprüche, **dadurch gekennzeichnet, dass** der erste Abstand unendlich ist und der zweite Abstand einige Meter beträgt.

12. Herstellungsverfahren eines Anzeigesystems nach einem der vorhergehenden Ansprüche, **dadurch gekennzeichnet, dass** mindestens eine der holographischen Verarbeitungen mithilfe der Aufzeichnung eines Interferenzphänomens zwischen zwei Lichtwellen bewerkstelligt wird, welche aus einer gleichen Quelle stammen, wobei mindestens eine der beiden Wellen (Σ'₁, Σ₂, Σ'₂) eben ist.

13. Herstellungsverfahren eines Anzeigesystems nach einem der Ansprüche 1 bis 11, **dadurch gekennzeichnet, dass** mindestens eine der holographischen Verarbeitungen mithilfe der Aufzeichnung eines Interferenzphänomens zwischen zwei Lichtwellen bewerkstelligt wird, welche aus einer gleichen Quelle stammen, wobei mindestens eine der beiden Wellen (Σ₁) kugelförmig ist.

14. Herstellungsverfahren eines Anzeigesystems nach einem der Ansprüche 1 bis 11, **dadurch gekennzeichnet, dass** mindestens eine der holographischen Verarbeitungen mithilfe der Aufzeichnung eines Interferenzphänomens zwischen zwei Lichtwellen bewerkstelligt wird, welche aus einer gleichen Quelle stammen, wobei mindestens eine der beiden Wellen asphärisch ist, wobei der Aufzeichnungsstand mindestens ein exzentrisches optisches Element beinhaltet, welches auf der Bahn der asphärischen Welle angeordnet ist.

15. Herstellungsverfahren eines Anzeigesystems nach einem der Ansprüche 1 bis 11, **dadurch gekennzeichnet, dass** mindestens eine der holographischen Verarbeitungen mithilfe der Aufzeichnung eines Interferenzphänomens zwischen zwei Lichtwellen bewerkstelligt wird, welche aus einer gleichen Quelle stammen, wobei mindestens eine der beiden Wellen asphärisch ist, wobei der Aufzeichnungsstand mindestens ein digital erzeugtes, holographisches optisches Element beinhaltet, welches auf der Bahn der asphärischen Welle angeordnet ist.

## Claims

1. Display system comprising a screen (D) and an optical collimation device forming the image (I1) of this screen at a first distance from said screen, said optical device comprising two holographic optical elements (HOE1, HOE2) operating by reflection, the first holographic optical element (HOE1) being closest to the screen, the second holographic optical element (HOE2) being closest to an observer, **characterised in that**:
- the screen displaying a first object at a first wavelength and a second object at a second wavelength, the first wavelength being different to the second wavelength;
- the first holographic optical element (HOE1) comprises a first holographic treatment (TH1) having a first optical power reflecting the first wavelength and transmitting the second wavelength;
- the first holographic optical element (HOE1) comprises a second holographic treatment (TH2) having a second optical power reflecting the second wavelength and transmitting the first wavelength;
- the second holographic optical element (HOE2) comprises a third holographic treatment (TH3) having a third optical power reflecting the first wavelength and transmitting the second wavelength;
- the second holographic optical element (HOE2) comprises a fourth holographic treatment (TH4) having a fourth optical power reflecting the second wavelength and transmitting the first wavelength;
- the first holographic element and the second holographic element being arranged in such a way that the image (I1) of the first object at the first wavelength forms at a first distance to the screen and that the image (12) of the second object at the second wavelength forms at a second distance to the screen, substantially different to the first distance.

2. Display system according to claim 1, **characterised in that** the first object is emitted in a first narrow spectral band centred on the first wavelength, the second object is emitted in a second narrow spectral band centred on the second wavelength, the first spectral band being separate from the second spectral band, each band having a spectral width comprising between 10 nanometres and 20 nanometres.

3. Display system according to one of the previous claims, **characterised in that** the first wavelength and the second wavelength have close colorimetries.

4. Display system according to one of claims 1 to 3, **characterised in that** the first wavelength and second wavelength have different colorimetries.

5. Display system according to claim 3, **characterised in that** the first wavelength is situated in the green and the second wavelength in the red.

6. Display system according to one of the previous claims, **characterised in that** the screen displays the first object at a third wavelength different to the first wavelength and the second wavelength, the first holographic treatment and the third holographic treatment reflecting said third wavelength.

7. Display system according to one of the previous claims, **characterised in that** the third optical power and the fourth optical power are zero.

8. Display system according to one of the previous claims, **characterised in that** the first holographic element is parallel to the second holographic element.

9. Display system according to one of the previous claims, **characterised in that** the form of the second holographic optical element is adapted in such a way as to integrate into an aircraft windscreen.

10. Display system according to one of the previous claims, **characterised in that** the angle at which the observer sees the image of the first or the image of the second object is approximately 20 degrees in a vertical axis.

11. Display system according to one of the previous claims, **characterised in that** the first distance is to infinity and the second distance is a few metres.

12. Method for producing a display system according to one of the previous claims, **characterised in that** at least one of the holographic treatments is implemented by means of recording an interference phenomenon between two light waves produced from the same source, at least one of the two waves (Σ'₁, Σ₂, Σ'₂) being planar.

13. Method for producing a display system according to one of claims 1 to 11, **characterised in that** at least one of the holographic treatments is implemented by means of recording an interference phenomenon between two light waves produced from the same source, at least one of the two waves being spherical (Σ₁).

14. Method for producing a display system according to one of claims 1 to 11, **characterised in that** at least one of the holographic treatments is implemented by means of recording an interference phenomenon between two light waves produced from the same source, at least one of the two waves being aspherical, the recording bench comprising at least one eccentric optical element positioned on the path of said aspherical wave.

15. Method for producing a display system according to one of claims 1 to 11, **characterised in that** at least one holographic treatments is implemented by means of recording an interference phenomenon between two light waves produced from the same source, at least one of the two waves being aspherical, the recording bench comprising at least one digitally generated holographic optical element positioned on the path of said aspherical wave.
